# FASCICULE DE BREVET EUROPEEN

(11) **EP 1 769 148 B1**
(45) Date de publication et mention de la délivrance du brevet: **11.01.2012**
(21) Numéro de dépôt: 05787378.8
(22) Date de dépôt: 04.07.2005
(51) Int. Cl.: F02D 13/02

(54) **PROCÉDÉ AMÉLIORÉ DE COMMANDE D'UN MOTEUR À COMBUSTION INTERNE, EN VUE DE DIMINUER LES ÉMISSIONS DE POLLUANTS, MOTEUR FONCTIONNANT SELON UN TEL PROCÉDÉ, ET VÉHICULE AUTOMOBILE ÉQUIPÉ D'UN TEL MOTEUR**
VERBESSERTES VERFAHREN ZUR STEUERUNG EINES VERBRENNUNGSMOTORS MIT DEM ZIEL DER REDUZIERUNG DER VERSCHMUTZENDEN EMISSIONEN, MOTOR DER NACH DIESEM VERFAHREN ARBEITET, UND KRAFTFAHRZEUG MIT GENANNTEM MOTOR
IMPROVED METHOD FOR CONTROLLING AN INTERNAL COMBUSTION ENGINE WITH THE AIM OF REDUCING THE POLLUTANT EMISSIONS, ENGINE OPERATING ACCORDING TO THIS METHOD, AND MOTOR VEHICLE EQUIPPED WITH SAID ENGINE

(30) Priorité: 12.07.2004 FR 0407766
(43) Date de publication de la demande: 04.04.2007
(73) Titulaire: PEUGEOT CITROËN AUTOMOBILES S.A., 78140 Vélizy Villacoublay (FR)
(72) Inventeur: LANTEIRES, Fabien, F-92800 Puteaux (FR)
(74) Mandataire: Ménès, Catherine
(86) Numéro de dépôt international: PCT/FR2005/050539
(87) Numéro de publication internationale: WO 2006/008416

(56) Documents cités:
- DE-A1- 19 905 636
- US-A- 2 344 993
- US-A1- 2003 154 964
- US-B1- 6 182 621

## Description

La présente invention concerne un procédé de commande du fonctionnement d'un ensemble de cylindre de moteur à combustion interne, ledit ensemble de cylindre comprenant un cylindre et un piston associé, définissant ensemble une chambre de combustion, le piston étant monté coulissant dans le cylindre entre une position de point mort bas et une position de point mort haut, la chambre de combustion étant susceptible d'être ouverte ou fermée à l'admission, et ouverte ou fermée à l'échappement, procédé dans lequel, durant un même cycle de fonctionnement, les phases suivantes sont réalisées :
- une phase d'ouverture à l'échappement;
- une première phase d'ouverture à l'admission durant une phase de compression du piston ; et
- une deuxième phase d'ouverture à l'admission postérieure à la première.

Un tel procédé de commande est déjà connu dans l'état de la technique, notamment par le document FR 2 796 418, et vise généralement à supprimer les phénomènes de cliquetis, sans dégrader de façon significative les performances du moteur. Un exemple similaire est décrite dans le document US-2003/0154964.

L'invention a pour objet un tel procédé de commande, permettant de réduire de façon importante les émissions des polluants constitués par les hydrocarbures résiduels non brûlés.

A cet effet, dans un procédé de commande conforme à l'invention, la deuxième phase d'ouverture à l'admission commence au passage du piston à une position comprise dans le deuxième tiers de sa course entre son point mort haut et son point mort bas, dans une phase de détente du piston. La première phase d'ouverture à l'admission est entièrement réalisée pendant la phase d'ouverture à l'échappement.

Grâce à cette disposition, lors de la deuxième phase d'ouverture à l'admission dite « principale », on augmente la turbulence des gaz dans la chambre de combustion, de sorte que la qualité de la combustion est accrue, ainsi que la tolérance à la dégradation d'avance à l'allumage. En conséquence, la mise en action des systèmes de post-traitement, c'est-à-dire des catalyseurs généralement utilisés pour réduire les émissions d'hydrocarbures non brûlés, est rendue plus rapide.

Suivant d'autres caractéristiques du procédé selon l'invention :
- la deuxième phase d'ouverture à l'admission commence au passage du piston sensiblement à sa position de mi-course ;
- la première phase d'ouverture à l'admission se termine après le passage du piston à sa position de point mort haut, en milieu de cycle.

L'invention vise également un moteur à combustion interne ayant au moins un ensemble de cylindre doté d'au moins un cylindre et un piston associé définissant ensemble une chambre de combustion, une soupape d'admission et une soupape d'échappement, et des moyens de commande pilotant lesdites soupapes d'admission et d'échappement de façon à ouvrir ou fermer la chambre de combustion, respectivement à l'admission et à l'échappement, caractérisé en ce que lesdits moyens de commande pilotent les soupapes de façon à réaliser un procédé tel que défini ci-dessus.

L'invention vise enfin un véhicule automobile comportant un moteur à combustion interne tel que défini ci-dessus.

On va maintenant décrire un mode particulier de réalisation de l'invention en référence aux Figures des dessins annexés, sur desquels :
- la Figure 1 est une vue schématique partielle en coupe, dans un plan axial, d'un ensemble de cylindre de moteur à combustion interne de véhicule automobile, d'un type adapté à la mise en oeuvre d'un procédé selon l'invention ; et
- la Figure 2 est un diagramme représentatif de la levée des soupapes d'échappement et d'admission, en fonction de la positon angulaire du vilebrequin.

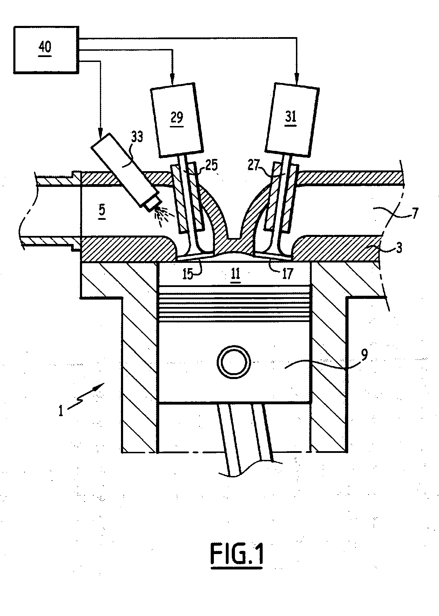

Sur la Figure 1, on a représenté en coupe une partie (ou ensemble de cylindre) d'un moteur à combustion interne d'un véhicule automobile. Cette partie de moteur comprend essentiellement un cylindre 1, et une culasse 3 coiffant ledit cylindre, dans laquelle sont formés d'une part un conduit d'admission 5, et d'autre part un conduit d'échappement 7.

Un piston 9, monté coulissant à l'intérieur du cylindre, délimite avec la culasse 3 et les parois périphériques du cylindre, une chambre de combustion 11. Le piston 9 est relié par l'intermédiaire d'une bielle à un vilebrequin (non représenté), dont on prendra la position angulaire (en degrés) comme grandeur de référence pour suivre l'évolution des cycles de fonctionnement de l'ensemble de cylindre.

Le conduit d'admission 5 et le conduit d'échappement 7 débouchent dans la chambre de combustion 11, respectivement par un orifice d'admission 15 et un orifice d'échappement 17.

La partie de moteur représentée comprend en outre une soupape d'admission 25 et une soupape d'échappement 27, associés au cylindre 1, et commandées par des actionneurs respectifs 29, 31 de façon à sélectivement obturer ou libérer respectivement l'orifice d'admission 15 et l'orifice d'échappement 17.

La partie de moteur représentée comprend de plus un injecteur de carburant 33, agencé pour injecter du carburant de façon contrôlée électroniquement dans le conduit d'admission 5.

Le pilotage des actionneurs 29, 31 et de l'injecteur 33 est assuré par une unité électronique de contrôle et de commande 40. Cette unité électronique de contrôle et de commande 40 assure également la commande d'allumage dans la chambre de combustion 11, au moyen d'une bougie, non représentée.

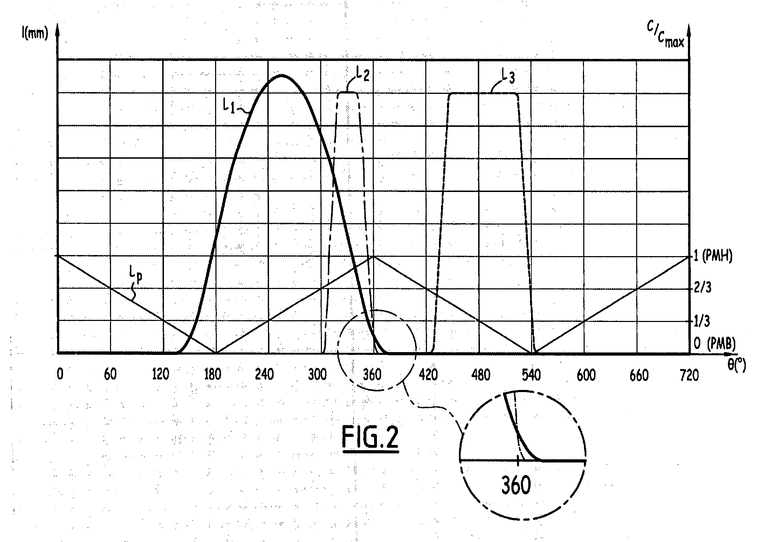

En référence à la Figure 2, on va à présent décrire un mode particulier de réalisation du procédé de commande selon l'invention. Ce procédé sera illustré par un diagramme montrant les phases d'ouverture et de fermeture des soupapes d'admission et d'échappement, sur un cycle de fonctionnement de l'ensemble de cylindre.

Sur le diagramme de la Figure 2, on a tracé les courbes L₁, L₂, L₃ de levée des soupapes 25, 27 en fonction de la positon angulaire du vilebrequin (ou « angle-vilebrequin »).

L'angle-vilebrequin θ (exprimé en degrés) est porté sur l'axe des abscisses, et l'amplitude de levée des soupapes 1 exprimée par exemple en mm) est portée sur l'axe des ordonnées.

La référence 0 de l'angle-vilebrequin est prise par hypothèse en correspondance avec une position de point mort haut (PMH) du piston 9, et avec le début du cycle.

Un cycle de fonctionnement du cylindre, dans l'exemple illustré, est réalisé sur deux tours de vilebrequin, entre les angles 0 et 720°.

Sur le diagramme de la Figure 2, on a également tracé la courbe Lₚ, représentative de la positon axiale du piston 9 en fonction de l'angle-vilebrequin θ, selon un deuxième axe d'ordonnées. Sur cet axe d'ordonnées, on a porté le rapport de la course C du piston sur sa course totale Cₘₐₓ entre son point mort bas (PMB) et son point mort haut (PMH), la valeur 0 correspondant à la position de point mort bas (PMB), et la valeur 1 correspondant à la position de point mort haut (PMH).

Par convention, on désignera par phase « ascendante » du piston une phase de compression, c'est-à-dire de déplacement du piston 9 de sa position de point mort bas vers sa position de point mort haut. A l'inverse, on désignera par phase « descendante » une phase de détente, c'est-à-dire de déplacement du piston de sa position de point mort haut vers sa position de point mort bas.

Dans le mode de réalisation illustré, le cycle de fonctionnement du cylindre comprend en premier lieu une phase d'ouverture à échappement, caractérisé par la courbe de levée de soupape d'échappement L₁.

Cette phase d'échappement commence vers la fin de la première phase descendante, à savoir entre 120° et 180° vilebrequin, et plus précisément aux alentours de 150° vilebrequin. Cette phase d'ouverture à l'échappement se termine au début de la phase descendante suivante, à savoir entre 360° et 420° vilebrequin, et plus précisément entre 360° et 380° vilebrequin.

Cette phase d'ouverture à l'échappement permet l'évacuation des gaz de combustion, produits pendant le cycle précédent et contenus dans la chambre de combustion.

Le cycle de fonctionnement comprend en outre une première phase d'ouverture à l'admission, appelée « ouverture pilote d'admission », qui est représentée par la courbe L₂.

Cette phase pilote d'admission commence durant la phase d'ouverture d'échappement, plus précisément durant la première phase ascendante du piston, et plus précisément encore, dans l'exemple représenté, à 300° vilebrequin environ.

Cette phase pilote d'admission se termine entre le passage du piston au point mort haut de cette première phase ascendante, c'est-à-dire vers le milieu du cycle, et la fin de la phase d'échappement.

Ainsi, la phase pilote d'admission se termine entre 360° et 380° vilebrequin, de préférence à une valeur d'angle vilebrequin sensiblement égale à 360°.

Le cycle comprend de plus une deuxième phase d'ouverture à l'admission, dite « phase principale d'admission », représentée par la courbe L₃.

Cette phase commence à un angle vilebrequin correspondant au passage du piston à une position comprise dans le deuxième tiers de sa course totale, c'est-à-dire entre 420° et 480° vilebrequin. De préférence, le début de la phase principale d'admission correspond sensiblement au passage du piston à sa position de mi-course (450° vilebrequin) dans la deuxième phase descendante.

La fin de la phase principale d'admission est prévue pour coïncider sensiblement avec le passage du piston à sa position de point mort bas, au terme de la deuxième phase descendante, c'est-à-dire avec un angle vilebrequin de 540° environ.

Naturellement, le cycle comprend une phase d'injection de carburant durant la phase principale d'admission, mais les caractéristiques de cette phase d'injection n'ont pas été portées sur le diagramme, et ne seront pas explicitées ici.

L'interférence entre la phase d'ouverture d'échappement et la phase pilote d'admission permet de refouler les gaz d'échappement dans le conduit d'admission.

La plus grosse partie de ces gaz reste emprisonnée dans le conduit d'admission et, du fait de leur température élevée, réchauffe les parois du conduit, et améliore la qualité du mélange air-carburant, notamment par vaporisation du carburant déposé sur les parois du conduit, dans le cas des moteurs à injection indirecte.

Le fait d'initier la phase principale d'admission autour de la position de mi-course du piston permet d'optimiser le niveau de turbulence des gaz à l'intérieur de la chambre de combustion, en profitant d'une vitesse maximale, ou proche de la valeur maximale, du piston.

On diminue ainsi les instabilités du moteur.

On notera que la précocité de la fin de la phase pilote d'admission, c'est-à-dire avant la fin de la phase d'échappement, conjuguée avec le début tardif (proche de la mi-course du piston en phase descendante) de la phase principale d'admission, permet de créer l'effet aérodynamique recherché de turbulence à l'intérieur de la chambre de combustion, après ré-aspiration des gaz brûlés.

Une telle amélioration du fonctionnement du moteur peut être obtenue par des moyens simples, et notamment avec une seule soupape d'admission pour chaque cylindre. Il pourrait être cependant envisagé de parvenir au même résultat avec deux soupapes d'admission distinctes, l'une réalisant la levée pilote, et l'autre réalisant la levée principale d'admission.

## Revendications

1. Procédé de commande du fonctionnement d'un ensemble de cylindre de moteur à combustion interne, ledit ensemble de cylindre comprenant un cylindre (1) et un piston associé (9), définissant ensemble une chambre de combustion (11), le piston étant monté coulissant dans le cylindre (1) entre une position de point mort bas et une position de point mort haut, la chambre de combustion étant susceptible d'être ouverte ou fermée à l'admission, et ouverte ou fermée à l'échappement, procédé dans lequel, durant un même cycle de fonctionnement, les phases suivantes sont réalisées :
- une phase d'ouverture à l'échappement (L₁) ;
- une première phase d'ouverture à l'admission (L₂) durant une phase de compression du piston; et
- une deuxième phase d'ouverture à l'admission (L₃) postérieure à la première;
**caractérisé en ce que** la deuxième phase d'ouverture à l'admission (L₃) commence au passage du piston (9) à une position comprise dans le deuxième tiers de sa course entre son point mort haut et son point mort bas, dans une phase de détente du piston et **en ce que** la première phase d'ouverture à l'admission (L₂) est entièrement réalisée pendant la phase d'ouverture à l'échappement (L₁)

2. Procédé suivant la revendication 1, **caractérisé en ce que** la deuxième phase d'ouverture à l'admission (L₃) commence au passage du piston (9) sensiblement à sa position de mi-course.

3. Procédé suivant l'une quelconque des revendications 1 à 2, **caractérisé en ce que** la première phase d'ouverture à l'admission (L₂) se termine après le passage du piston à sa position de point mort haut, en milieu de cycle.

4. Moteur à combustion interne ayant au moins un ensemble de cylindre doté d'au moins un cylindre (1) et un piston (9) associé définissant ensemble une chambre de combustion (11), une soupape d'admission (25) et une soupape d'échappement (27), et des moyens de commande (40) pilotant lesdites soupapes d'admission (25) et d'échappement (27) de façon à ouvrir ou fermer la chambre de combustion (11), respectivement à l'admission et à l'échappement, **caractérisé en ce que** lesdits moyens de commande (40) pilotent les soupapes (25, 27) de façon à réaliser un procédé conforme à l'une quelconque des revendications 1 à 3.

5. Véhicule automobile comportant un moteur à combustion interne selon la revendication 4.

## Claims

1. A method for controlling the operation of a cylinder assembly of an internal combustion engine, said cylinder assembly comprising a cylinder (1) and an associated piston (9), defining together a combustion chamber (11), the piston being mounted slidingly in the cylinder (1) between a bottom dead centre position and a top dead centre position, the combustion chamber being capable of being opened or closed on intake, and opened or closed on exhaust, in which method, during the same operating cycle, the following phases are realized:
- an exhaust opening phase (L₁) ;
- a first intake opening phase (L₂) during a compression phase of the piston; and
- a second intake opening phase (L₃) subsequent to the first;
**characterized in that** the second intake opening phase (L₃) starts at the passage of the piston (9) to a position comprised in the second third of its course between its top dead centre and its bottom dead centre, in a phase of expansion of the piston and **in that** the first intake opening phase (L₂) is entirely realized during the exhaust opening phase (L₁).

2. The method according to Claim 1, **characterized in that** the second intake opening phase (L₃) starts on the passage of the piston (9) substantially to its mid-course position.

3. The method according to any one of Claims 1 to 2, **characterized in that** the first intake opening phase (L₂) ends after the passage of the piston to its top dead centre position, in the middle of the cycle.

4. An internal combustion engine having at least one cylinder assembly equipped with at least one cylinder (1) and an associated piston (9) defining together a combustion chamber (11), an intake valve (25) and an exhaust valve (27), and control means (40) driving the said intake (25) and exhaust (27) valves so as to open or close the combustion chamber (11), respectively on intake and on exhaust, **characterized in that** the said control means (40) drive the valves (25, 27) so as to realize a method according to any one of Claims 1 to 3.

5. A motor vehicle comprising an internal combustion engine according to Claim 4.

## Patentansprüche

1. Verfahren zum Steuern des Funktionierens einer Zylindereinheit eines Verbrennungsmotors, wobei die Zylindereinheit einen Zylinder (1) und einen dazugehörenden Kolben (9) aufweist, die gemeinsam eine Brennkammer (11) definieren, wobei der Kolben in dem Zylinder (1) zwischen einer unteren Totpunktposition und einer oberen Totpunktposition gleitend montiert ist, wobei die Brennkammer am Einlass offen oder geschlossen sein kann und am Auslass offen oder geschlossen sein kann, Verfahren, bei dem während eines gleichen Betriebszyklus die folgenden Phasen ausgeführt werden:
- eine Auslassöffnungsphase (L₁) ;
- eine erste Einlassöffnungsphase (L₂) während einer Kompressionsphase des Kolbens; und
- eine zweite Einlassöffnungsphase (L₃) nach der ersten;
**dadurch gekennzeichnet, dass** die zweite Einlassöffnungsphase (L₃) beim Übergang des Kolbens (9) auf eine Position beginnt, die in dem zweiten Drittel seines Hubs zwischen seinem oberen Totpunkt und seinem unteren Totpunkt in einer Entspannungsphase des Kolbens liegt, und dass die erste Einlassöffnungsphase (L₂) ganz während der Auslassöffnungsphase (L₁) ausgeführt wird.

2. Verfahren nach Anspruch 1, **dadurch gekennzeichnet, dass** die zweite Einlassöffnungsphase (L₃) beim Übergang des Kolbens (9) im Wesentlichen auf seine Position auf halbem Hub beginnt.

3. Verfahren nach einem der Ansprüche 1 bis 2, **dadurch gekennzeichnet, dass** die erste Einlassöffnungsphase (L₂) nach dem Übergang des Kolbens auf seine obere Totpunktposition in der Mitte des Zyklus endet.

4. Verbrennungsmotor, der mindestens eine Einheit Zylinder hat, die mit mindestens einem Zylinder (1) und einem dazugehörenden Kolben (9) versehen ist, die gemeinsam eine Brennkammer (11) definieren, mit einem Einlassventil (25) und einem Auslassventil (27) und Steuermitteln (40), die das Einlassventil (25) und das Auslassventil (27) derart steuern, dass die Brennkammer (11) jeweils am Einlass und am Auslass geöffnet oder geschlossen wird, **dadurch gekennzeichnet, dass** die Steuermittel (40) die Ventile (25, 27) derart steuern, dass ein Verfahren nach einem der Ansprüche 1 bis 3 ausgeführt wird.

5. Kraftfahrzeug, das einen Verbrennungsmotor nach Anspruch 4 aufweist.
